(19) Europäisches Patentamt / European Patent Office / Office européen des brevets

(11) **EP 3 071 531 B1**

(12) **EUROPEAN PATENT SPECIFICATION**

(45) Date of publication and mention
of the grant of the patent:
**22.09.2021 Bulletin 2021/38**

(21) Application number: **14816465.0**

(22) Date of filing: **13.11.2014**

(51) Int Cl.:
*C03C 21/00* ^(2006.01)    *C03C 3/093* ^(2006.01)

(86) International application number:
**PCT/US2014/065343**

(87) International publication number:
**WO 2015/077109 (28.05.2015 Gazette 2015/21)**

(54) **SCRATCH-RESISTANT BOROALUMINOSILICATE GLASS**

KRATZFESTES BOROALUMINOSILICATGLAS

VERRE BOROALUMINOSILICATÉ RÉSISTANT AUX RAYURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2013 US 201361906666 P**

(43) Date of publication of application:
**28.09.2016 Bulletin 2016/39**

(73) Proprietor: **Corning Incorporated
Corning, New York 14831 (US)**

(72) Inventors:
• **ELLISON, Adam James
  Corning, New York 14830 (US)**
• **MAURO, John Christopher
  Corning, New York 14830 (US)**
• **NONI, JR. Douglas Miles
  Horseheads, New York 14845 (US)**
• **THIRION, Lynn Marie
  Watkins Glen, New York 14891 (US)**
• **VENKATARAMAN, Natesan
  Painted Post, New York 14870 (US)**

(74) Representative: **Elkington and Fife LLP
Prospect House
8 Pembroke Road
Sevenoaks, Kent TN13 1XR (GB)**

(56) References cited:
WO-A1-2013/016157    WO-A2-2013/130665
US-A1- 2003 109 370    US-A1- 2011 294 649

• **None**

## Description

### BACKGROUND

The disclosure relates to ion exchangeable glasses that a high level of intrinsic scratch resistance. More particularly, the disclosure relates to ion exchangeable glasses containing the network formers $SiO_2$, $B_2O_3$, and $Al_2O_3$. Even more particularly, the disclosure relates to glass laminates having as clad layer comprising such ion exchangeable glasses.

WO2013/016157 teaches an ion exchange, strengthened laminate including a low coefficient of thermal expansion, CTE, clad glass. Similar glasses ares taught by WO2013/130665 and US2011/294649.

### SUMMARY

Ion exchangeable boroaluminosilicate glasses having high levels of intrinsic scratch resistance are provided. The glasses include the network formers $SiO_2$, $B_2O_3$, and $Al_2O_3$, and at least one of $Li_2O$, $Na_2O$, and $K_2O$. When ion exchanged these glasses may have a Knoop scratch initiation threshold of at least about 40 Newtons (N). These glasses may also be used to form a clad layer for a glass laminate in which the core layer has a coefficient of thermal expansion that is greater than that of the clad glass.

Accordingly, one aspect of the disclosure is to provide a glass according to claim 1

Embodiments provide a glass comprising $SiO_2$, $Al_2O_3$, $B_2O_3$, and at least one of $Li_2O$, $Na_2O$, and $K_2O$, wherein the glass is ion exchanged and has a Knoop scratch threshold of at least about 40 N (Newtons).

There is also provided a glass laminate according to claim 8.

A further aspect of the invention is to provide a method of making a glass laminate according to claim 10.

These and other aspects, advantages, and salient features will become apparent from the following detailed description, the accompanying drawings, and the appended claims.

### BRIEF DESCRIPTION OF THE DRAWINGS

FIGURE 1 is a schematic cross-sectional view of a glass laminate; and

FIGURE 2 is a plot of Knoop scratch thresholds for the glass compositions listed in Table 1; and

FIGURE 3 is a plot of Vickers crack initiation thresholds for the glass compositions listed in Table 1.

### DETAILED DESCRIPTION

In the following description, like reference characters designate like or corresponding parts throughout the several views shown in the figures. It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may include any number of those elements recited, either individually or in combination with each other. Unless otherwise specified, a range of values, when recited, includes both the upper and lower limits of the range as well as any ranges therebetween. As used herein, the indefinite articles "a," "an," and the corresponding definite article "the" mean "at least one" or "one or more," unless otherwise specified. It also is understood that the various features disclosed in the specification and the drawings can be used in any and all combinations.

As used herein, the terms "glass article" and "glass articles" are used in their broadest sense to include any object made wholly or partly of glass. Unless otherwise specified, all compositions are expressed in terms of mole percent (mol%). Coefficients of thermal expansion (CTE) are expressed in terms of $10^{-7}/°C$ and represent a value measured over a temperature range from about 20°C to about 300°C, unless otherwise specified.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. Thus, a glass that is "substantially

free of $P_2O_5$," for example, is one in which $P_2O_5$ is not actively added or batched into the glass, but may be present in very small amounts as a contaminant.

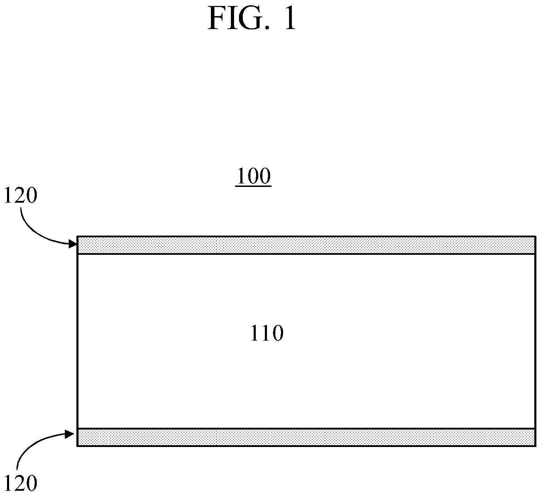

Referring to the drawings in general and to FIG. 1 in particular, it will be understood that the illustrations are for the purpose of describing particular embodiments and are not intended to limit the disclosure or appended claims thereto. The drawings are not necessarily to scale, and certain features and certain views of the drawings may be shown exaggerated in scale or in schematic in the interest of clarity and conciseness.

Described herein are ion exchangeable glasses and glass articles such as, for example, laminates, made therefrom. The glasses comprise the network formers $SiO_2$, $B_2O_3$, and $Al_2O_3$, with have an especially high concentration of trigonally coordinated $B_2O_3$ to achieve a high native scratch resistance. These glasses also include at least one of the alkali metal oxides $Li_2O$, $Na_2O$, and $K_2O$, and have lower CTE values compared to those observed for typical chemically strengthened glasses. The glasses described herein may be fusion drawn either individually or as the clad layer in a laminate. When paired with a core glass having a higher CTE, the clad layer will be subject to an additional compressive stress, which further improves the mechanical performance (e.g., damage and scratch resistance) of the glass.

In some embodiments, the glasses described herein are formable by down-draw processes that are known in the art, such as slot-draw and fusion-draw processes. The fusion draw process is an industrial technique that has been used for the large-scale manufacture of thin glass sheets. Compared to other flat glass manufacturing techniques, such as the float or slot draw processes, the fusion draw process yields thin glass sheets with superior flatness and surface quality. As a result, the fusion draw process has become the dominant manufacturing technique in the fabrication of thin glass substrates for liquid crystal displays, as well as for cover glass for personal electronic devices such as notebooks, entertainment devices, tables, laptops, and the like.

The fusion draw process involves the flow of molten glass over a trough known as an "isopipe," which is typically made of zircon or another refractory material. The molten glass overflows the top of the isopipe from both sides, meeting at the bottom of the isopipe to form a single sheet where only the interior of the final sheet has made direct contact with the isopipe. Since neither exposed surface of the final glass sheet has made contact with the isopipe material during the draw process, both outer surfaces of the glass are of pristine quality and do not require subsequent finishing.

In order to be fusion drawable, a glass must have a sufficiently high liquidus viscosity (i.e., the viscosity of a molten glass at the liquidus temperature). In some embodiments, the glasses described herein have a liquidus viscosity of at least about 30 kilopoise (kpoise); in other embodiments, at least about 100 kpoise; in other embodiments, at least about 120 kpoise; and in still other embodiments, these glasses have a liquidus viscosity of at least about 300 kpoise. In those instances in which the alkali-doped and alkali-free glass is used as a clad layer in a glass laminate and the viscosity behavior of the core glass with respect to temperature is approximately the same as that of the clad glass, the liquidus viscosity of the clad glass may be greater than or equal to about 70 kPoise.

Traditional fusion draw is accomplished using a single isopipe, resulting in a homogeneous glass product. The more complicated laminate fusion process makes use of two isopipes to form a laminated sheet comprising a core glass composition surrounded on either (or both) side by outer clad layers. One of the main advantages of laminate fusion is that the CTE difference that occurs when the coefficient of thermal expansion of the clad glass is less than that of the core glass results in a compressive stress in the outer clad layer, which increases the strength of the final glass product and may, in some embodiments, eliminate the need for strengthening the clad glass of the laminate via ion exchange. Because the glasses described herein are ion exchangeable, however, a surface compressive stress may be imparted to the glass without lamination.

Accordingly, in some embodiments, the alkali-doped and alkali-free glasses described herein may be used to form a glass laminate, schematically shown in FIG. 1. Glass laminate 100 comprises a core glass 110 surrounded by a clad glass 120 or "clad layer" formed from the alkali-doped and alkali-free glass described herein. The core glass 110 has a CTE that is greater than that of the alkali-doped and alkali-free glass in the clad layer 120. The core glass may, in some embodiments, be an alkali aluminosilicate glass. In one non-limiting example, the core glass is an alkali aluminosilicate glass having the composition 66.9 mol% $SiO_2$, 10.1 mol% $Al_2O_3$, 0.58 mol% $B_2O_3$, 7.45 mol% $Na_2O$, 8.39 mol% $K_2O$, 5.78 mol% MgO, 0.58 mol% CaO, 0.2 mol% $SnO_2$, 0.01 mol% $ZrO_2$, and 0.01 mol% $Fe_2O_3$, with a strain point of 572°C, an anneal point of 629°C, a softening point of 888°C, and CTE = 95.5 x $10^{-7}$/°C.

When employed as a clad glass in a laminated product, glasses described herein can provide high compressive stresses to the clad layer. The CTE of low alkali metal oxide/alkali-doped and alkali-free fusion-formable glasses described herein are generally in the range of about 75 x $10^{-7}$/°C or less and, in some embodiments, in the range of about 55 x $10^{-7}$/°C or less. When such a glass is paired with, for example, an alkali aluminosilicate glass (e.g., Gorilla® Glass, manufactured by Corning Incorporated) having a CTE of 90 x $10^{-7}$/°C, the expected compressive stress in the clad glass can be calculated using the elastic stress equations given below in which subscripts 1 and 2 refer to the core glass and the clad glass, respectively:

$$\sigma_2 = \frac{E_1(e_2 - e_1)}{(\frac{E_1}{E_2}(1-v_2)) + (\frac{2t_2}{t_1}(1-v_1))}$$

and

$$\sigma_1 = -\frac{2t_2}{t_1}\sigma_2$$

where E is Young's modulus, v is Poisson's ratio, t is the glass thickness, $\sigma$ is the stress, and $e_2$-$e_1$ is the difference in thermal expansion between the clad glass and the core glass. Using the same elastic modulus and Poisson's ratio for the clad glass and core glass further simplifies the above equations.

To calculate the compressive stress in the clad layer due to the difference in thermal expansion between the clad glass and core glass, it is assumed that the stress sets in below the strain point of the softer glass of the clad and core. The stresses in the clad glass can be estimated using these assumptions and the equations above. For a typical display-like clad glass having a CTE of about $30 \times 10^{-7}$/°C and an alkali aluminosilicate core glass with CTE of $90 \times 10^{-7}$/°C, overall thicknesses in the range of 0.5-1.0 mm and clad glass thickness of 10-100$\mu$m, the compressive stress of the clad glass is estimated to be in a range from about 200 MPa to about 315 MPa. In some embodiments, the glasses described herein have coefficients of thermal expansion of less than about $40 \times 10^{-7}$/°C and, in some embodiments, less than about $35 \times 10^{-7}$/°C. For these glasses, the compressive stress of the clad glass layer would be at least about 30 MPa, in other embodiments, at least about 40 MPa, and, in still other embodiments, at least about 80 MPa.

The glasses described herein have especially low coefficients of thermal expansion. In some embodiments, the CTE of the glass is less than less than about $40 \times 10^{-7}$/°C and, in other embodiments, is less than about $35 \times 10^{-7}$/°C. When paired with a core glass having a higher CTE, the glasses described herein provide a high level of compressive stress in the clad layers of the final laminated glass product. This increases the strength of the glass laminate product. Room-temperature compressive stresses of at least about 30 MPa, in other embodiments, at least about 40 MPa, and, in still other embodiments, at least about 80 MPa, are attainable by using the glasses disclosed herein in the clad layer of the laminate. When used as a clad layer, the liquidus viscosity requirements of the glasses described herein may be lowered. In those embodiments where the viscosity behavior of the core glass with respect to temperature is approximately the same as (i.e., "matched with") that of the clad glass, the liquidus viscosity of the clad glass may be greater than or equal to about 70 kPoise.

In some embodiments, the clad glass compositions have values of Young's modulus and shear modulus that are significantly less than those of other commercially available fusion-drawn glasses. In some embodiments, the Young's modulus is less than about 70 gigapascals (GPa) and, in still other embodiments, less than about 65 GPa. The low elastic moduli provide these glasses with a high level of intrinsic damage resistance.

In certain embodiments, the glass is substantially free of, or contains 0 mol%, $P_2O_5$, and/or alkali metal oxide modifiers.

The glass may further include up to about 0.5 mol% $Fe_2O_3$ (i.e., 0 mol% $\leq Fe_2O_3 \leq$ 0.5 mol%); up to about 0.5 mol% $ZrO_2$ (i.e., 0 mol% $\leq ZrO_2 \leq$ 0.5 mol%); and, optionally, at least one fining agent such as $SnO_2$, $CeO_2$, $As_2O_3$, $Sb_2O_5$, Cl⁻, F⁻. The at least one fining agent may, in some embodiments, include up to about 0.5 mol% $SnO_2$ (i.e., 0 mol% $\leq SnO_2 \leq$ 0.5 mol%); up to about 0.7 mol% $CeO_2$ (i.e., 0 mol% $\leq CeO_2 \leq$ 0.7 mol%); up to about 0.5 mol% $As_2O_3$ (i.e., 0 mol% $\leq As_2O_3 \leq$ 0.5 mol%); and up to about 0.5 mol% $Sb_2O_3$ (i.e., 0 mol% $\leq Sb_2O_3 \leq$ 0.5 mol%).

In particular embodiments, the glasses consist essentially of or comprise: from about 62 mol% to about 68 mol% $SiO_2$ (i.e., 62 mol% $\leq SiO_2 \leq$ 68 mol%); from about 6 mol% to about 10 mol% $Al_2O_3$ (i.e., 6 mol% $\leq Al_2O_3 \leq$ 10 mol%); from about 6 mol% to about 20 mol% $B_2O_3$ (i.e., 6 mol% $\leq B_2O_3 \leq$ 20 mol%); at least one of $Li_2O$, $Na_2O$, and $K_2O$, wherein 6 mol% $\leq Li_2O + Na_2O + K_2O \leq$ 13 mol%; up to about 4 mol% MgO (i.e., 0 mol% $\leq$ MgO $\leq$ 4 mol%); up to about 4 mol% CaO (i.e., 0 mol% $\leq$ CaO $\leq$ 4 mol%); and up to about 1 mol% SrO (i.e., 0 mol% $\leq$ SrO $\leq$ 1 mol. The total amount of MgO, CaO, SrO, $Li_2O$, $Na_2O$, and $K_2O$ in the glasses described herein is greater than or equal to about 4 mol% and less than or equal to 4 mol% plus the amount of $Al_2O_3$ present in the glass (i.e., 4 mol% $\leq$ MgO + CaO + SrO + $Li_2O$ + $Na_2O$ + $K_2O \leq Al_2O_3$ +4 mol%). In some embodiments, 4 mol% $\leq B_2O_3$ - (MgO + CaO + SrO + $Li_2O$ + $Na_2O$ + $K_2O$ - $Al_2O_3$) $\leq$ 20 mol%. In certain embodiments, the glass is substantially free of, or contains 0 mol%, $P_2O_5$, and/or alkali metal oxide modifiers.

The glass may further include up to about 0.5 mol% $ZrO_2$ (i.e., 0 mol% $\leq ZrO_2 \leq$ 0.5 mol%), up to about 0.5 mol% $Fe_2O_3$ (i.e., 0 mol% $\leq Fe_2O_3 \leq$ 0.5 mol%) and at least one fining agent such as $SnO_2$, $CeO_2$, $As_2O_3$, $Sb_2O_5$, Cl⁻, F⁻. The at least one fining agent may, in some embodiments, include up to about 0.5 mol% $SnO_2$ (i.e., 0 mol% $\leq SnO_2 \leq$ 0.5 mol%); up to about 0.7 mol% $CeO_2$ (i.e., 0 mol% $\leq CeO_2 \leq$ 0.7 mol%); up to about 0.5 mol% $As_2O_3$ (i.e., 0 mol%

$\leq$ As$_2$O$_3 \leq$ 0.5 mol%); and up to about 0.5 mol% Sb$_2$O$_3$ (i.e., 0 mol% $\leq$ Sb$_2$O$_3$ $\leq$ 0.5 mol%).

Compositions and of non-limiting examples of these glasses are examples 1-6 listed in Table 1. Each of the oxide components of these glasses serves a function. Silica (SiO$_2$), for example, is the primary glass forming oxide, and forms the network backbone for the molten glass. Pure SiO$_2$ has a low CTE and is alkali metal-free. Due to its extremely high melting temperature, however, pure SiO$_2$ is incompatible with the fusion draw process. The viscosity curve is also much too high to match with any core glass in a laminate structure. The SiO$_2$ concentration ranges from about 62 mol% to about 68 mol %.

In addition to silica, the glasses described herein comprise the network formers Al$_2$O$_3$ and B$_2$O$_3$ to achieve stable glass formation, low CTE, low Young's modulus, low shear modulus, and to facilitate melting and/or forming. By mixing all three of these network formers in appropriate concentrations, it is possible achieve stable bulk glass formation while minimizing the need for network modifiers such as alkali or alkaline earth oxides, which act to increase CTE and modulus. Like SiO$_2$, Al$_2$O$_3$ contributes to the rigidity to the glass network. Alumina may exist in the glass in either fourfold or fivefold coordination. The glasses described herein comprise from about 6 mol% to about 10 mol % Al$_2$O$_3$.

Boron oxide (B$_2$O$_3$) is also a glass-forming oxide that is used to reduce viscosity and thus improve the ability to melt and form glass. B$_2$O$_3$ may exist in either threefold or fourfold coordination in the glass network. Threefold coordinated B$_2$O$_3$ is the most effective oxide for reducing the Young's modulus and shear modulus, thus improving the intrinsic damage resistance of the glass. Accordingly, the glasses described herein, in some embodiments, comprise from about 5 mol% up to about 35 mol% B$_2$O$_3$ and, in other embodiments, from about 6 mol% to about 20 mol% B$_2$O$_3$.

Alkaline earth oxides (MgO, CaO, and SrO), like B$_2$O$_3$, also improve the melting behavior of the glass. However, they also act to increase CTE and Young's and shear moduli. In some embodiments, the glasses described herein comprise up to about 5 mol% MgO, up to about 5 mol% CaO, and up to about 2 mol% SrO. In other embodiments, these glasses may comprise up to about 4 mol% MgO, from about 2 mol% up to about 4 mol% CaO, and up to about 1 mol% SrO.

The alkali oxides Li$_2$O, Na$_2$O, and K$_2$O are used to achieve chemical strengthening of the glass by ion exchange. In some embodiments, the glass includes Na$_2$O, which can be exchanged for potassium in a salt bath containing, for example, KNO$_3$. For the glasses disclosed herein, 1 mol% $\leq$ Li$_2$O + Na$_2$O + K$_2$O $\leq$ 15 mol%, and, in certain embodiments, 6 mol% $\leq$ Li$_2$O + Na$_2$O + K$_2$O $\leq$ 13 mol%. In some embodiments, 1 mol% $\leq$ Na$_2$O $\leq$ 15 mol%, in other embodiments, 6 mol% $\leq$ Na$_2$O $\leq$ 13 mol%, and, in certain embodiments, the glass is substantially free of Li$_2$O and K$_2$O, or comprises 0 mol% Li$_2$O and K$_2$O. In other embodiments, 1 mol% $\leq$ Li$_2$O $\leq$ 15 mol%, and, in certain embodiments, 6 mol% $\leq$ Li$_2$O $\leq$ 13 mol%. In other embodiments, 1 mol% $\leq$ K$_2$O $\leq$ 15 mol%, and, in certain embodiments, 6 mol% $\leq$ K$_2$O $\leq$ 13 mol%.

In order to ensure that the vast majority of B$_2$O$_3$ in the glass is in the threefold coordinated state and thus obtain a high native scratch resistance, 4 mol% $\leq$ MgO + CaO + SrO + Li$_2$O + Na$_2$O + K$_2$O $\leq$ Al$_2$O$_3$ + 4 mol%. In some embodiments, 4 mol% $\leq$ B$_2$O$_3$ - (MgO + CaO + SrO + Li$_2$O + Na$_2$O + K$_2$O - Al$_2$O$_3$) $\leq$ 35 mol% and, in other embodiments, 4 mol% $\leq$ B$_2$O$_3$ - (MgO + CaO + SrO + Li$_2$O + Na$_2$O + K$_2$O - Al$_2$O$_3$) $\leq$ 20 mol%.

The glass may also include at least one fining agent such as SnO$_2$, CeO$_2$, As$_2$O$_3$, Sb$_2$O$_5$, Cl$^-$, F$^-$ in small concentrations to aid in the elimination of gaseous inclusions during melting. In some embodiments, the glass may comprise up to about 0.5 mol% SnO$_2$, up to about 0.7 mol% CeO$_2$, up to about 0.5 mol% As$_2$O$_3$, and/or up to about 0.5 mol% Sb$_2$O$_3$.

A small amount of ZrO$_2$ may also also be introduced by contact of hot glass with zirconia-based refractory materials in the melter, and thus monitoring its level in the glass may be important to judging the rate of tank wear over time. The glass, may in some embodiments, include up to about 0.5 mol% ZrO$_2$. The glass may further comprise low concentrations of Fe$_2$O$_3$, as this material is a common impurity in batch materials. In some embodiments, the glass may include up to about 0.5 mol% Fe$_2$O$_3$.

Non-limiting examples of compositions of the glasses described herein are listed in Table 1, of which examples 1 to 6 are examples according to claim 1 and examples 7-10 are reference examples. Table 2 lists selected physical properties (strain, anneal and softening points, density, CTE, liquidus temperatures, modulus, refractive index, and stress optical coefficient (SOC) of the examples listed in Table 1.

Table 1.  Exemplary compositions of glasses.

| mol % | 1 | 2 | 3 | 4 | 5 |
|---|---|---|---|---|---|
| $SiO_2$ | 64.39 | 64.62 | 64.05 | 65.17 | 65.51 |
| $Al_2O_3$ | 6.11 | 6.95 | 7.57 | 8.35 | 9.11 |
| $B_2O_3$ | 22.23 | 20.11 | 19.19 | 16.29 | 14.22 |
| $Na_2O$ | 0.73 | 2.41 | 3.80 | 5.15 | 6.76 |
| $K_2O$ | 0.02 | 0.01 | 0.01 | 0.01 | 0.01 |
| MgO | 3.11 | 3.00 | 2.88 | 2.84 | 2.69 |
| CaO | 3.16 | 2.74 | 2.33 | 2.05 | 1.59 |
| SrO | 0.01 | 0.01 | 0.01 | 0.01 | 0.01 |
| BaO | 0.00 | 0.00 | 0.00 | 0.00 | 0.00 |
| $SnO_2$ | 0.13 | 0.09 | 0.08 | 0.08 | 0.05 |
| $ZrO_2$ | 0.10 | 0.06 | 0.06 | 0.05 | 0.05 |
| $Fe_2O_3$ | 0.01 | 0.01 | 0.01 | 0.01 | 0.01 |
| Total | 100.00 | 100.00 | 100.00 | 100.00 | 100.00 |

Table 1.  Continued

| mol % | 6 | 7 | 8 | 9 | 10 |
|---|---|---|---|---|---|
| $SiO_2$ | 65.96 | 66.13 | 66.47 | 67.09 | 67.19 |
| $Al_2O_3$ | 9.76 | 10.71 | 11.63 | 12.21 | 12.47 |
| $B_2O_3$ | 12.30 | 9.97 | 7.32 | 5.27 | 4.62 |
| $Na_2O$ | 7.84 | 9.58 | 11.64 | 12.69 | 13.12 |
| $K_2O$ | 0.01 | 0.01 | 0.01 | 0.01 | 0.01 |
| MgO | 2.67 | 2.59 | 2.50 | 2.42 | 2.36 |
| CaO | 1.35 | 0.94 | 0.34 | 0.21 | 0.12 |
| SrO | 0.01 | 0.01 | 0.01 | 0.01 | 0.01 |
| BaO | 0.00 | 0.00 | 0.00 | 0.00 | 0.00 |
| $SnO_2$ | 0.05 | 0.03 | 0.06 | 0.08 | 0.08 |
| $ZrO_2$ | 0.04 | 0.02 | 0.01 | 0.01 | 0.01 |
| $Fe_2O_3$ | 0.01 | 0.01 | 0.01 | 0.01 | 0.01 |
| Total | 100.00 | 100.00 | 100.00 | 100.00 | 100.00 |

Table 2.  Physical properties of the glasses listed in Table 1.

| Example | 1 | 2 | 3 | 4 | 5 |
|---|---|---|---|---|---|
| Anneal Pt. (°C) | 578.9 | 562.4 | 560.5 | 563.9 | 567.4 |
| Strain Pt. (°C) | 524.8 | 510.6 | 511.4 | 514 | 517.2 |
| Softening Pt. (°C) | 860.9 | 810.9 | 805.2 | 806 | 814 |
| Density $(g/cm^3)$ | 2.204 | 2.228 | 2.251 | 2.27 | 2.292 |
| CTE $(\times 10^{-7}/°C)$ | 33.0 | 36.8 | 40.8 | 45.1 | 49.9 |

| Example | 1 | 2 | 3 | 4 | 5 |
|---|---|---|---|---|---|
| Liquidus (°C): | None | None | None | None | 900 |
| Modulus (Mpsi) | 7.56 | 9.60 | 9.35 | 9.19 | 8.86 |
| Index | 1.4840 | 1.4859 | 1.4874 | 1.4887 | 1.4897 |
| SOC | 4.809 | 4.476 | 4.27 | 4.15 | 3.958 |

Table 2. Continued

| Example | 6 | 7 | 8 | 9 | 10 |
|---|---|---|---|---|---|
| Anneal Pt. (°C) | 573.7 | 582.7 | 598.5 | 613.1 | 619.6 |
| Strain Pt. (°C) | 525 | 533.4 | 547 | 560.6 | 566.3 |
| Softening Pt. (°C) | 820.8 | 831.8 | 853.4 | 878 | 885.8 |
| Density (g/cm$^3$) | 2.309 | 2.334 | 2.36 | 2.376 | 2.383 |
| CTE (x10$^{-7}$/°C) | 53.9 | 52.2 | 66.9 | 71.6 | 72.4 |
| Liquidus (°C): | 960 | 955 | 990 | 1010 | 1010 |
| Modulus (Mpsi) | 8.69 | 8.40 | 9.63 | 8.20 | 7.96 |
| Index | 1.4909 | 1.4924 | 1.4937 | 1.4952 | 1.4951 |
| SOC | 3.801 | 3.68 | 3.523 | 3.426 | 3.343 |

In some aspects, the glasses described herein are ion exchangeable; i.e., cations - typically monovalent alkali metal cations - which are present in these glasses are replaced with larger cations - typically monovalent alkali metal cations, although other cations such as $Ag^+$ or $Tl^+$ - having the same valence or oxidation state. The replacement of smaller cations with larger cations creates a surface layer that is under compression, or compressive stress CS. This layer extends from the surface into the interior or bulk of the glass to a depth of layer DOL. The compressive stress in the surface layers of the glass are balanced by a tensile stress, or central tension CT, in the interior or inner region of the glass. Compressive stress and depth of layer are measured using those means known in the art. Such means include, but are not limited to measurement of surface stress (FSM) using commercially available instruments such as the FSM-6000, manufactured by Luceo Co., Ltd. (Tokyo, Japan and methods of measuring compressive stress and depth of layer are described in ASTM 1422C-99, entitled "Standard Specification for Chemically Strengthened Flat Glass," and ASTM 1279.19779 "Standard Test Method for Non-Destructive Photoelastic Measurement of Edge and Surface Stresses in Annealed, Heat-Strengthened, and Fully-Tempered Flat Glass". Surface stress measurements rely upon the accurate measurement of the stress optical coefficient (SOC), which is related to the stress-induced birefringence of the glass. SOC in turn is measured by those methods that are known in the art, such as fiber and four point bend method, both of which are described in ASTM standard C770-98 (2008), entitled "Standard Test Method for Measurement of Glass Stress-Optical Coefficient" and a bulk cylinder method. SOC values determined for the glass compositions listed in Table 1 are reported in Table 2.

In a particular non-limiting embodiment, ion exchange is carried out by immersing the glass article in a molten salt bath substantially comprising potassium nitrate ($KNO_3$) and, optionally, small amounts of sodium nitrate ($NaNO_3$). The in the salt bath is at a temperature of about 410°C, and the glass is ion exchanged for about 16 hours. Other alkali salts (e.g., chloride, sulfates, etc.), salt bath temperatures, and ion exchange times than those described above may be used to achieved the desired level of compressive stress and depth of the surface compressive layer (depth of layer). Similarly, ion exchange is not limited to the exchange of $K^+$ ions from the salt bath for $Na^+$ ions in the glass. For example, sodium-for-lithium ion exchange may be accomplished by immersing a lithium-containing glass in a molten bath containing sodium salt, and potassium-for-lithium ion exchange may be accomplished by immersing a lithium-containing glass in a molten bath containing potassium salt.

In some embodiments, the glasses described herein are ion exchanged and have a compressive layer extending from a surface of the glass to a depth of layer. In certain embodiments, the compressive layer is under a compressive stress of at least about 220 megaPascals (MPa) and extends to a depth of layer DOL of at least about 8 microns (μm). In other embodiments, the compressive stress is at least about 400 MPa and the depth of layer is at least about 30 μm. Table 3 lists compressive stresses and depths of layer measured for glasses having the compositions listed in Table 1 after ion exchange for 16 hours at 410°C in a $KNO_3$ molten salt bath. Table 3 also lists the $Na_2O$ content of each of the glasses. Little or no ion exchange occurred in those glasses having low sodium contents (examples 1-3), whereas those glasses having high sodium contents (examples 8-10) were optimized for good ion exchange performance and thus exhibited greater compressive stresses and deeper depth of layer. The best overall damage resistance was observed in the middle of the composition space (e.g., examples 5-7).

Table 3. Compressive stress, depths of layer, and $Na_2O$ content, expressed in mol%, of ion exchanged glasses.

| Example | 1 | 2 | 3 | 4 | 5 |
|---|---|---|---|---|---|
| CS (MPa) | A | A | A | 233.67 | 296.43 |
| DOL (μm) | A | A | A | 8.37 | 14.51 |
| $Na_2O$ | 0.73 | 2.41 | 3.80 | 5.15 | 6.76 |

A: little or no ion exchange occurred

Table 3. Continued.

| Example | 6 | 7 | 8 | 9 | 10 |
|---|---|---|---|---|---|
| CS (MPa) | 338.73 | 407.74 | 558.26 | 632.42 | 670.43 |
| DOL (μm) | 20.2 | 31.34 | 39.11 | 48.4 | 52.2 |
| $Na_2O$ | 7.84 | 9.58 | 11.64 | 12.69 | 13.12 |

The high amount of boron present coupled with chemical strengthening by ion exchange provides the glass with a high level of intrinsic or "native" scratch resistance. Scratch resistance is determined by Knoop scratch threshold testing. In Knoop threshold testing, a mechanical tester holds a Knoop diamond in which a glass is scratched at increasing loads to determine the onset of lateral cracking; i.e., sustained cracks that are greater than twice the width of the original scratch/groove. This onset of lateral cracking is defined as the "Knoop Scratch Threshold." When ion exchanged, the glasses described herein have a minimum Knoop scratch threshold of about 15 N (Newtons). In some embodiments, the Knoop scratch threshold is at least about 10 N; in other embodiments, at least about 15 N; in other embodiments, at least about 30 N; and, still in other embodiments, at least about 40 N.

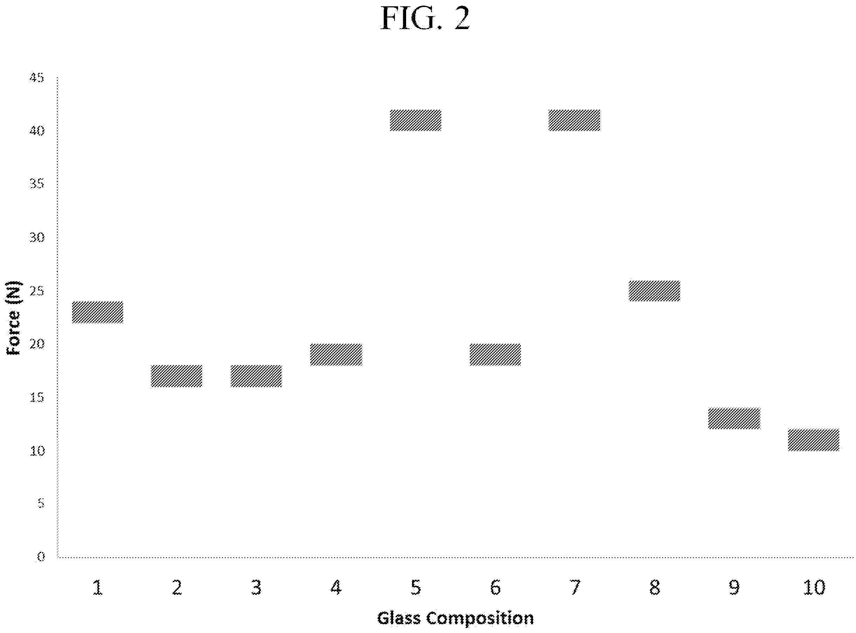

Knoop scratch thresholds are plotted in FIG. 2 for the glasses listed in Table 1. Indentation fracture thresholds were determined after ion exchanging the glasses in a molten $KNO_3$ salt bath for 16 hours at 410°C. Compositions 5 and 7 (see Table 1) exhibited Knoop scratch thresholds that exceeded the maximum threshold (40 N) that could be determined by the measurement apparatus.

In comparison to the glasses described herein, other alkaline earth borosilicate glasses (Eagle XG® Glass, manufactured by Corning Incorporated) exhibit a Knoop Scratch Threshold of 8-10 N, and ion exchanged alkali aluminosilicate glasses (Gorilla® Glass and Gorilla® Glass 3, manufactured by Corning Incorporated) exhibit Knoop Scratch Thresholds of 3.9-4.9 N and 9.8-12 N. respectively.

The ion exchanged glasses described herein also possess a degree of intrinsic damage resistance (IDR), which may be characterized by the Vickers crack initiation threshold of the ion exchanged glass. In some embodiments, the ion exchanged glass has a Vickers crack initiation threshold is at least about 10 N; in other embodiments, at least about 15 N; in other embodiments, at least about 30 N; and, still in other embodiments, at least about 40 N. The Vickers crack initiation threshold measurements described herein are performed by applying and then removing an indentation load to the glass surface at a rate of 0.2 mm/min. The maximum indentation load is held for 10 seconds. The crack initiation threshold is defined at the indentation load at which 50% of 10 indents exhibit any number of radial/median cracks emanating from the corners of the indent impression. The maximum load is increased until the threshold is met for a given glass composition. All indentation measurements are performed at room temperature in 50% relative humidity.

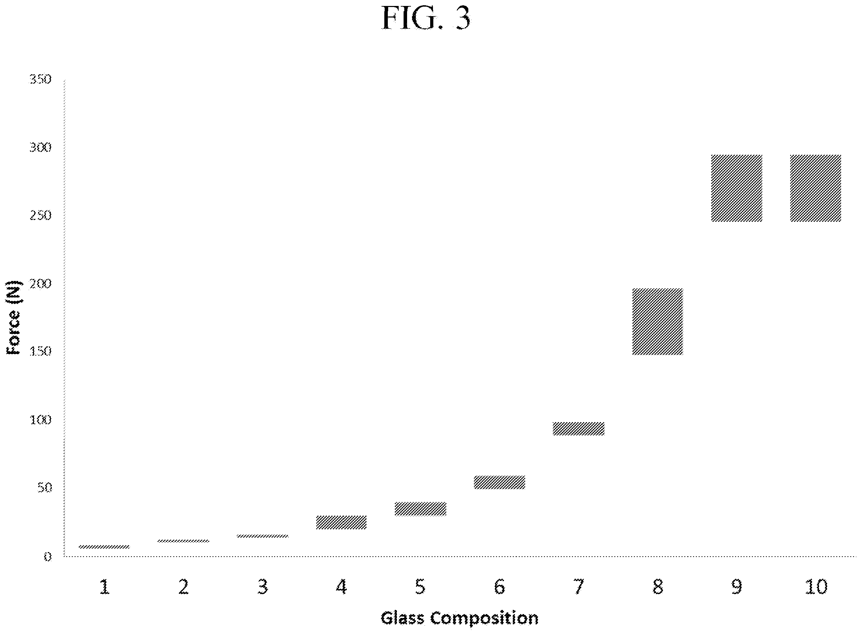

Vickers indentation fracture thresholds are plotted in FIG. 3 for the glasses listed in Table 1. Indentation fracture thresholds were determined after ion exchanging the glasses in a molten $KNO_3$ salt bath for 26 hours at 410°C.

The high scratch and indentation thresholds exhibited by these glasses may be attributed to the chemistry of the glass compositions and the compressive stress layer resulting from ion exchange. The glass compositions described herein are designed to provide a fully connected network (i.e., no non-bridging oxygens) and achieve a high level of threefold-coordinated boron. The threefold-coordinated boron gives the glass a more open structure, thereby allowing it to plastically densify under an indentation or scratch load. This plastic densification absorbs the energy from the external load, which normally would be used to initiate a crack. The addition of a compressive stress layer that is formed by ion exchange creates an additional barrier that must be overcome in order to damage the glass. The combination of these two effects gives these glasses their exceptionally high damage resistance.

A method of making the glass laminates described herein is also provided. The method includes providing a core glass melt and fusion-drawing the core glass melt to form a core glass; providing a clad glass melt; and fusion-drawing the clad glass melt to form the clad glass, the clad glass surrounding the core glass, wherein the core glass has a coefficient of thermal expansion that is greater than that of the clad glass. The core glass may, in some embodiments, an alkali aluminosilicate glass. The clad glass comprises from about 50 mol% to about 70 mol% $SiO_2$; from about 5 mol% to about 12 mol% $Al_2O_3$; from about 5 mol% to about 35 mol% $B_2O_3$; at least one of $Li_2O$, $Na_2O$, and $K_2O$, wherein 1 mol% $\leq Li_2O + Na_2O + K_2O \leq$ 15 mol%; up to about 5 mol% MgO; up to about 5 mol% CaO; and up to about 2 mol% SrO. In certain embodiments, the clad glass comprises from about 62 mol% to about 68 mol% $SiO_2$; from greater than 6 mol% to about 10 mol% $Al_2O_3$; from about 6 mol% to about 20 mol% $B_2O_3$; up to about 4 mol% MgO; up to about 4 mol% CaO; and up to about 1 mol% SrO and, optionally, at least one fining agent, and wherein 1 mol% $\leq Li_2O + Na_2O + K_2O \leq$ 13 mol%. The clad glass layer is under a compressive stress of at least about 30 MPa, in other embodiments, at least about 40 MPa, and, in still other embodiments, at least about 80 MPa.

While typical embodiments have been set forth for the purpose of illustration, the foregoing description should not be deemed to be a limitation on the scope of the disclosure or appended claims.

**Claims**

1. A glass, the glass comprising: from 62 mol% to 68 mol% $SiO_2$; from 6 mol% to 10 mol% $Al_2O_3$; from 5 mol% to 35 mol% $B_2O_3$; at least one of $Li_2O$, $Na_2O$, and $K_2O$, wherein 1 mol% $\leq Li_2O + Na_2O + K_2O \leq$ 15 mol%; up to 5 mol% MgO; up to 5 mol% CaO; and up to 2 mol% SrO; and wherein 4 mol% $\leq$ MgO + CaO + SrO + $Li_2O$ + $Na_2O$ + $K_2O \leq Al_2O_3$ + 4 mol%.

2. The glass of Claim 1, wherein 4 mol% $\leq B_2O_3$ - (MgO + CaO + SrO + $Li_2O$ + $Na_2O$ + $K_2O$ - $Al_2O_3$) $\leq$ 35 mol%.

3. The glass of any one of the preceding claims, wherein the glass is ion exchanged and has a Knoop scratch threshold of at least 30 N.

4. The glass of any one of the preceding claims, wherein the glass has a coefficient of thermal expansion of less than 75 x 10$^{-7}$/°C.

5. The glass of any one of the preceding claims, wherein the glass further comprises at least one fining agent, wherein the at least one fining agent comprises at least one of $SnO_2$, $CeO_2$, $As_2O_3$, $Sb_2O_5$, Cl$^-$, and F$^-$.

6. The glass of any one of the preceding claims, wherein the glass comprises: from 6 mol% to 20 mol% $B_2O_3$; at least one of $Li_2O$, $Na_2O$, and $K_2O$, wherein 6 mol% $\leq Li_2O + Na_2O + K_2O \leq$ 13 mol%; up to 4 mol% MgO; up to 4 mol% CaO; and up to 1 % SrO.

7. The glass of Claim 6, wherein 4 mol% $\leq B_2O_3$ - (MgO + CaO + SrO + $Li_2O$ + $Na_2O$ + $K_2O$ - $Al_2O_3$) $\leq$ 20 mol%.

8. A glass laminate comprising:

   a clad layer being a glass according to any of the preceding claim; and
   a core glass and having a coefficient of thermal expansion that is greater than a coefficient of thermal expansion of the clad layer,
   wherein the clad layer is under a compressive stress of at least 30 MPa.

9. The glass of any one of the preceding claims, wherein the glass is free of $P_2O_5$.

10. A method of making a glass laminate, the glass laminate comprising a core glass and a clad glass, the method comprising:

    providing a core glass melt;
    fusion-drawing the core glass melt to form a core glass having a first coefficient of thermal expansion; and
    providing a clad glass melt, the clad glass melt comprising from 62 mol% to 68 mol% $SiO_2$; from 6 mol% to 10

mol% $Al_2O_3$; from 5 mol% to 35 mol% $B_2O_3$; at least one of $Li_2O$, $Na_2O$, and $K_2O$, wherein 1 mol% $\leq Li_2O +$ $Na_2O + K_2O \leq$ 15 mol%; up to 5 mol% MgO; up to 5 mol% CaO; and up to 2 mol% SrO and wherein 4 mol% $\leq$ MgO + CaO + SrO + $Li_2O$ + $Na_2O$ + $K_2O \leq Al_2O_3$ + 4 mol%; and

fusion-drawing the clad glass melt to form the clad glass, the clad glass surrounding the core glass and having a second coefficient of thermal expansion, wherein the first coefficient of thermal expansion that is greater than that the second coefficient of thermal expansion, and wherein the clad layer is under a compressive stress of at least 30 MPa.

11. The method of Claim 10, wherein the clad layer has a coefficient of thermal expansion of less than 75 x $10^{-7}$/°C.

12. The method of Claim 10 or Claim 11, wherein the clad glass comprises from 62 mol% to 68 mol% $SiO_2$; from greater than 6 mol% to 10 mol% $Al_2O_3$; from 6 mol% to 20 mol% $B_2O_3$; up to 4 mol% MgO; up to 4 mol% CaO; and up to 1 mol% SrO and, optionally, at least one fining agent, and wherein 1 mol% $\leq Li_2O + Na_2O + K_2O \leq$ 13 mol%.

13. The method of any one of Claims 10-12, wherein the core glass is an alkali aluminosilicate glass.


**Patentansprüche**

1. Glas, umfassend: von 62 Mol-% bis 68 Mol-% $SiO_2$; von 6 Mol-% bis 10 Mol-% $Al_2O_3$, von 5 Mol-% bis 35 Mol-% $B_2O_3$; mindestens eines von $Li_2O$, $Na_2O$ und $K_2O$, wobei 1 Mol-% $\leq Li_2O + Na_2O + K_2O \leq$ 15 Mol-%; bis zu 5 Mol-% MgO; bis zu 5 Mol-% CaO; und bis zu 2 Mol-% SrO; und wobei 4 Mol-% $\leq$ MgO + CaO + SrO + $Li_2O$ + $Na_2O$ + $K_2O < Al_2O_3$+ 4 Mol-%.

2. Glas nach Anspruch 1, wobei 4 Mol-% $\leq B_2O_3$ - (MgO + CaO + SrO + $Li_2O$ + $Na_2O$ + $K_2O$ - $Al_2O_3$) $\leq$ 35 Mol-%.

3. Glas nach einem der vorherigen Ansprüche, wobei das Glas ionenausgetauscht ist und eine Knoop-Kratzschwellenwert von mindestens 30 N aufweist.

4. Glas nach einem der vorherigen Ansprüche, wobei das Glas einen Wärmeausdehnungskoeffizienten von weniger als 75 x $10^{-7}$/°C aufweist.

5. Glas nach einem der vorherigen Ansprüche, wobei das Glas ferner mindestens ein Klärmittel umfasst, wobei das mindestens eine Klärmittel mindestens eines von $SnO_2$, $CeO_2$, $AS_2O_3$, $Sb_2O_5$, Cl⁻ und F⁻ umfasst.

6. Glas nach einem der vorherigen Ansprüche, wobei das Glas Folgendes umfasst: von 6 Mol-% bis 20 Mol-% $B_2O_3$; mindestens eines von $Li_2O$, $Na_2O$, und $K_2O$, wobei 6 Mol-% $\leq Li_2O + Na_2O + K_2O \leq$ 13 Mol-%; bis zu 4 Mol-% MgO; bis zu 4 Mol-% CaO; und bis zu 1 % SrO.

7. Glas nach Anspruch 6, wobei 4 Mol-% $\leq B_2O_3$ - (MgO + CaO + SrO + $Li_2O$ + $Na_2O$ + $K_2O$ - $Al_2O_3$) $\leq$ 20 Mol-%.

8. Glaslaminat, umfassend:

eine plattierte Schicht, die ein Glas nach einem vorherigen Anspruch ist; und
ein Kernglas und das einen Wärmeausdehnungskoeffizienten aufweist, der größer ist als der Wärmeausdehnungskoeffizient der plattierten Schicht, wobei die plattierte Schicht einer Druckspannung von mindestens 30 MPa ausgesetzt ist.

9. Glas nach einem der vorherigen Ansprüche, wobei das Glas frei von $P_2O_5$ ist.

10. Verfahren zur Herstellung eines Glaslaminats, das Glaslaminat umfassend ein Kernglas und ein plattiertes Glas, das Verfahren umfassend:

Bereitstellen einer Kernglasschmelze;
Schmelzziehen der Kernglasschmelze, um ein Kernglas zu bilden, das einen ersten Wärmeausdehnungskoeffizienten aufweist; und
Bereitstellen einer Plattierglasschmelze, die Plattierglasschmelze umfassend von 62 Mol-% bis 68 Mol-% $SiO_2$; von 6 Mol-% bis 10 Mol-% $Al_2O_3$; von 5 Mol-% bis 35 Mol-% $B_2O_3$; mindestens eines von $Li_2O$, $Na_2O$ und $K_2O$,

wobei 1 Mol-% $\leq$ Li$_2$O + Na$_2$O + K$_2$O $\leq$ 15 Mol-%; bis zu 5 Mol-% MgO; bis zu 5 Mol-% CaO; und bis zu 2 Mol-% SrO und wobei 4 Mol-% $\leq$ MgO + CaO + SrO + Li$_2$O + Na$_2$O + K$_2$O $\leq$ Al$_2$O$_3$+ 4 Mol-%; und schmelzziehen der Plattierglasschmelze, um das plattierte Glas zu bilden, wobei das plattierte Glas das Kernglas umgibt und einen zweiten Wärmeausdehnungskoeffizienten aufweist, wobei der erste Wärmeausdehnungskoeffizient größer ist als der zweite Wärmeausdehnungskoeffizient, und wobei die plattierte Schicht einer Druckspannung von mindestens 30 MPa ausgesetzt ist.

**11.** Verfahren nach Anspruch 10, wobei die plattierte Schicht einen Wärmeausdehnungskoeffizienten von weniger als 75 x 10$^{-7}$/°C aufweist.

**12.** Verfahren nach Anspruch 10 oder Anspruch 11, das plattierte Glas umfassend von 62 Mol-% bis 68 Mol-% SiO$_2$; mehr als 6 Mol-% bis 10 Mol-% Al$_2$O$_3$; von 6 Mol-% bis 20 Mol-% B$_2$O$_3$; bis zu 4 Mol-% MgO; bis zu 4 Mol-% CaO; und bis zu 1 Mol-% SrO und optional mindestens ein Klärmittel, und wobei 1 Mol-% $\leq$ Li$_2$O + Na$_2$O + K$_2$O $\leq$ 13 Mol-%.

**13.** Verfahren nach einem der Ansprüche 10-12, wobei das Kernglas ein Alkalialuminosilikatglas ist.

**Revendications**

**1.** Verre, le verre comprenant : de 62 % en moles à 68 % en moles de SiO$_2$; de 6 % en moles à 10 % en moles d'Al$_2$O$_3$ ; de 5 % en moles à 35 % en moles de B$_2$O$_3$; au moins l'un parmi Li$_2$O, Na$_2$O et K$_2$O, dans lequel 1 % en moles $\leq$ Li$_2$O + Na$_2$O + K$_2$O $\leq$ 15 % en moles ; jusqu'à 5 % en moles de MgO ; jusqu'à 5 % en moles de CaO ; et jusqu'à 2 % en moles de SrO ; et dans lequel 4 % en moles $\leq$ MgO + CaO + SrO + Li$_2$O + Na$_2$O + K$_2$O $\leq$ Al$_2$O$_3$ + 4 % en moles.

**2.** Verre selon la revendication 1, dans lequel 4 % en moles $\leq$ B$_2$O$_3$ - (MgO + CaO + SrO + Li$_2$O + Na$_2$O + K$_2$O - Al$_2$O$_3$) $\leq$ 35 % en moles.

**3.** Verre selon l'une quelconque des revendications précédentes, ledit verre ayant subi un échange d'ions et présentant un seuil de rayure Knoop d'au moins 30 N.

**4.** Verre selon l'une quelconque des revendications précédentes, ledit verre présentant un coefficient de dilatation thermique inférieur à 75 x 1O$^{-7}$/°C.

**5.** Verre selon l'une quelconque des revendications précédentes, ledit verre comprenant en outre au moins un agent d'affinage, ledit au moins un agent d'affinage comprenant au moins l'un parmi SnO$_2$, CeO$_2$, AS$_2$O$_3$, Sb$_2$O$_5$, Cl$^-$ et F$^-$.

**6.** Verre selon l'une quelconque des revendications précédentes, ledit verre comprenant : de 6 % en moles à 20 % en moles de B$_2$O$_3$; au moins l'un parmi Li$_2$O, Na$_2$O et K$_2$O, dans lequel 6 % en moles $\leq$ Li$_2$O + Na$_2$O + K$_2$O $\leq$ 13 % en moles ; jusqu'à 4 % en moles de MgO ; jusqu'à 4 % en moles de CaO ; et jusqu'à 1 % de SrO.

**7.** Verre selon la revendication 6, dans lequel 4 % en moles $\leq$ B$_2$O$_3$ - (MgO + CaO + SrO + Li$_2$O + Na$_2$O + K$_2$O - Al$_2$O$_3$) $\leq$ 20 % en moles.

**8.** Stratifié de verre comprenant :

une couche de revêtement qui est un verre selon l'une quelconque des revendications précédentes ; et
un verre de cœur et présentant un coefficient de dilatation thermique qui est supérieur au coefficient de dilation thermique de la couche de revêtement,
ladite couche de revêtement étant sous une contrainte de compression d'au moins 30 MPa.

**9.** Verre selon l'une quelconque des revendications précédentes, ledit verre étant exempt de P$_2$O$_5$.

**10.** Procédé de fabrication d'un stratifié de verre, le stratifié de verre comprenant un verre de cœur et un verre de revêtement, le procédé comprenant :

la production d'une masse de verre de cœur en fusion ;
l'étirage en fusion de la masse de verre de cœur en fusion pour former un verre de cœur présentant un premier coefficient de dilatation thermique ; et

la production d'une masse de verre de revêtement en fusion, la masse de verre de revêtement en fusion comprenant de 62 % en moles à 68 % en moles de $SiO_2$ ; de 6 % en moles à 10 % en moles d'$Al_2O_3$, de 5 % en moles à 35 % en moles de $B_2O_3$ ; au moins l'un parmi $Li_2O$, $Na_2O$ et $K_2O$, dans laquelle 1 % en moles ≤ $Li_2O$ + $Na_2O$ + $K_2O$ ≤ 15 % en moles ; jusqu'à 5 % en moles de MgO ; jusqu'à 5 % en moles de CaO ; et jusqu'à 2 % en moles de SrO et dans laquelle 4 % en moles ≤ MgO + CaO + SrO + $Li_2O$ + $Na_2O$ + $K_2O$ ≤ $Al_2O_3$ + 4 % en moles ; et

l'étirage en fusion de la masse de verre de revêtement en fusion pour former un verre de revêtement, le verre de revêtement entourant le verre de cœur et présentant un second coefficient de dilatation thermique, ledit premier coefficient de dilatation thermique étant supérieur au second coefficient de dilatation thermique et ladite couche de revêtement étant sous une contrainte de compression d'au moins 30 MPa.

11. Procédé selon la revendication 10, ledit verre de revêtement présentant un coefficient de dilatation thermique inférieur à 75 x $10^{-7}$/°C.

12. Procédé selon la revendication 10 ou la revendication 11, ledit verre de revêtement comprenant de 62 % en moles à 68 % en moles de $SiO_2$; de 6 % en moles à 10 % en moles d'$Al_2O_3$ ; de 6 % en moles à 20 % en moles de $B_2O_3$ ; jusqu'à 4 % en moles de MgO ; jusqu'à 4 % en moles de CaO ; et jusqu'à 1 % en moles de SrO et, éventuellement, au moins un agent d'affinage, et dans lequel 1 % en moles ≤ $Li_2O$ + $Na_2O$ + $K_2O$ ≤ 13 % en moles.

13. Procédé selon l'une quelconque des revendications 10 à 12, ledit verre de cœur étant un verre d'aluminosilicate alcalin.

EP 3 071 531 B1

# FIG. 1

100

120

110

120

FIG. 2

# FIG. 3

**EP 3 071 531 B1**

**REFERENCES CITED IN THE DESCRIPTION**

**Patent documents cited in the description**

- WO 2013016157 A
- WO 2013130665 A
- US 2011294649 A